# EUROPEAN PATENT APPLICATION

(11) **EP 4 708 258 A1**
(43) Date of publication of application: **11.03.2026**
(21) Application number: 24800021.8
(22) Date of filing: 28.02.2024
(51) Int. Cl.: G09C 1/00, G06F 21/62, G06Q 50/10

(54) **PROCESSING SYSTEM, PROCESSING METHOD, AND PROCESSING PROGRAM**

(30) Priority: 01.05.2023 JP 2023075879
(71) Applicant: NTT DOCOMO BUSINESS, Inc., Tokyo 100-8019 (JP)
(72) Inventor: TANAKA, Satoshi, Tokyo 100-8019 (JP); SAKURAI, Yoichi, Tokyo 100-8019 (JP); SAWADA, Masashi, Tokyo 100-8019 (JP); YAMAGIWA, Ryuta, Tokyo 105-6309 (JP)
(74) Representative: Hoffmann Eitle
(86) International application number: PCT/JP2024/007425
(87) International publication number: WO 2024/228290

(57) **Abstract**

A processing system (1) is a processing system that stores data in a fragmented share state in a distributed manner across a plurality of devices, and includes a cleansing server (40) that includes a cleansing unit (42) that performs data cleansing processing for secure computation registration on pieces of data transmitted from a plurality of organizations, a secure computation system (50) that stores the pieces of data after the data cleansing processing in a fragmented share state in a distributed manner across a plurality of servers, and performs analysis processing in response to an analysis request on secure computation based on the pieces of data after the data cleansing processing, and a web server (60) that outputs an analysis result of the analysis processing performed in response to the analysis request to a request source of the analysis request.

## Description

### Field

The present invention relates to a processing system, a processing method, and a processing program.

### Background

Not only security measures but also safe information use and utilization are required for companies that handle personal information and important information. In particular, while advantages are expected from cross-sectional data accumulation and data use and utilization, there are also factors that hinder data use and utilization, such as risks accompanying data disclosure and concerns regarding protection of the personal information and the like.

Accordingly, secure computation has been proposed as a technology capable of satisfying such conflicting requirements. The secure computation is a technology that conceals sensitive data and returns only a result without mutually disclosing the data.

### Citation List

### Patent Literature

Patent Literature 1: WO 2019/124260 A
Patent Literature 2: JP 2020-042128 A

### Non Patent Literature

Non Patent Literature 1: Nippon Telegraph and Telephone Inc., System for Secure Computation and Principle Thereof, [online], [Searched on November 24, 2022], Internet <URL:https://www.rd.ntt/e/sc/project/data-security/NTT-himitsu-keisan.pdf>

### Summary

### Technical Problem

Here, it is necessary to collect data held by organizations from a large number of organizations for cross-sectional analysis among the organizations. However, a data format (format or format version) is often different between the organizations. When pieces of data in different formats are input into a secure computation system, there are cases where analysis cannot be performed.

The present invention has been made in view of the above, and an object of the present invention is to provide a processing system, a processing method, and a processing program, which enable analysis on a secure computation system even in a case where pieces of data having different formats are registered.

### Solution to Problem

In order to solve a problem(s) as described above and achieve an object, a processing system according to the present invention is a processing system that stores data in a fragmented share state in a distributed manner across a plurality of devices, characterized by including a cleansing server that includes a cleansing unit that performs data cleansing processing for secure computation registration on each of pieces of data transmitted from a plurality of organizations, a secure computation system that stores the pieces of data after the data cleansing processing in a fragmented share state in a distributed manner across a plurality of servers, and performs analysis processing in response to an analysis request on secure computation based on the pieces of data after the data cleansing processing, and a web server that outputs an analysis result of the analysis processing performed in response to the analysis request to a request source of the analysis request.

### Advantageous Effects of Invention

According to the present invention, it is possible to perform analysis on a secure computation system even in a case where pieces of data having different formats are registered.

### Brief Description of Drawings

FIG. 1 is a block diagram illustrating an example of a configuration of a processing system according to a first embodiment.
FIG. 2 is a diagram illustrating an outline of processing performed by the processing system according to the first embodiment.
FIG. 3 is a sequence diagram illustrating a processing procedure of a processing method according to the first embodiment.
FIG. 4 is a block diagram illustrating an example of a configuration of a processing system according to a second embodiment.
FIG. 5 is a diagram for describing an outline of processing performed by the processing system according to the second embodiment.
FIG. 6 is a sequence diagram illustrating a processing procedure of a processing method according to the second embodiment.
FIG. 7 is a diagram illustrating a computer that executes a program.

### Description of Embodiments

Hereinafter, embodiments of a processing system, a processing method, and a processing program according to the present application will be described in detail with reference to the drawings. Note that the processing system, the processing method, and the processing program according to the present application are not limited by the embodiments.

In the following embodiments, the processing system, the processing method, and a processing flow of the processing program according to the embodiments will be sequentially described, and finally, effects of the embodiments will be described.

### [First Embodiment]

First, a first embodiment will be described. The first embodiment will be described by taking, as an example, a case where a secure computation system that performs secure computation in which computation (analysis) can be performed in a state in which data is encrypted is provided in a model that aggregates data in a service providing infrastructure (a data center (DC) infrastructure or a cloud infrastructure). In the service providing infrastructure, data cleansing processing for secure computation registration is performed on data transmitted from a plurality of organizations (a plurality of facilities, associations, companies, and the like), thereby enabling cross-sectional analysis on the secure computation system even in a case where pieces of data having different formats (format or format version) are registered.

### [Configuration of Processing System]

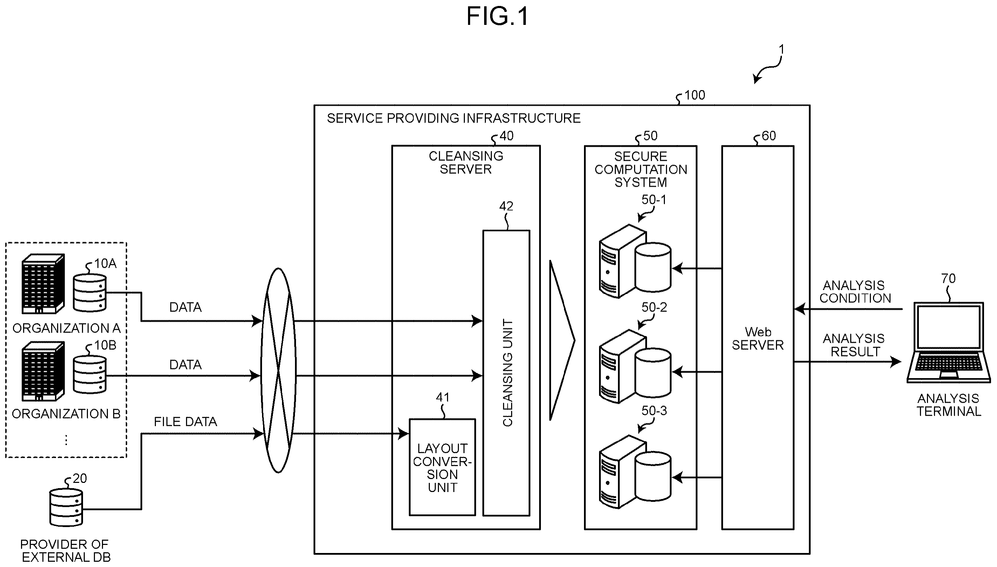

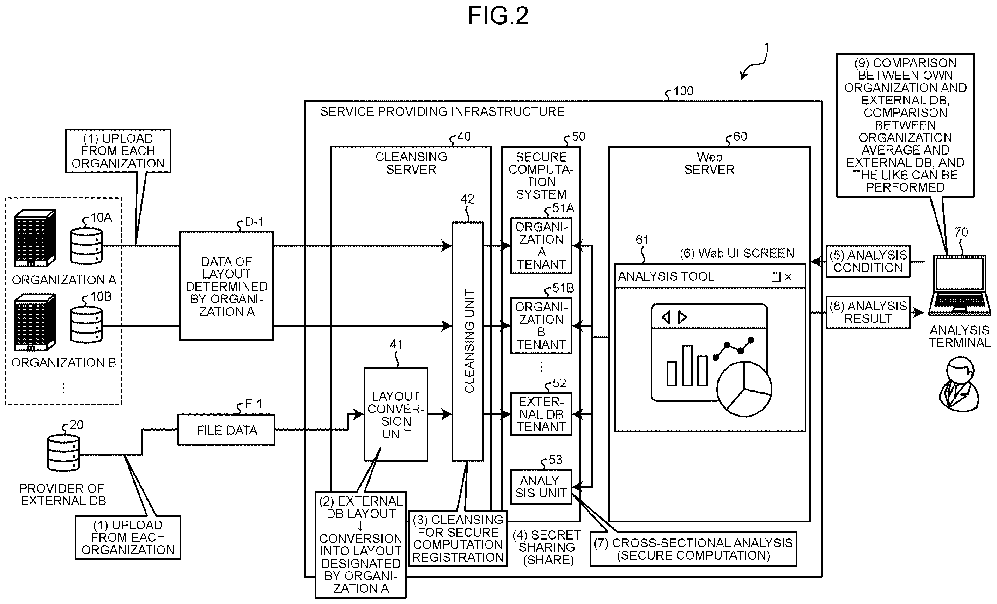

A configuration of the processing system according to the first embodiment will be described. FIG. 1 is a block diagram illustrating an example of the configuration of the processing system according to the first embodiment. FIG. 2 is a diagram illustrating an outline of processing performed by the processing system according to the first embodiment.

Hereinafter, as illustrated in FIGS. 1 and 2, an example will be described in which a processing system 1 includes registrant servers 10A and 10B of organizations A and B, which upload data, a provider server 20 of an external database (DB), a service providing infrastructure 100, and an analysis terminal 70 (installed in the organization A, for example) that makes an analysis request regarding the data. The configuration illustrated in FIG. 1 is merely an example, and a specific configuration and the number of devices are not particularly limited. In addition, the registrant servers 10A and 10B and the analysis terminal 70 will be separately described for ease of description, but in actual operation, the analysis terminal 70 may have functions of the registrant servers 10A and 10B.

The registrant servers 10A and 10B collect pieces of data of patients of the organizations A and B and upload the pieces of data to the service providing infrastructure 100. For example, an operator of the registrant server 10A selects data to be uploaded through a web user interface (UI) screen for the processing system 1, which is deployed in a web browser, and uploads the data to the service providing infrastructure 100. At this time, the pieces of data uploaded by the registrant servers 10A and 10B are pieces of data of a layout determined by the organization A. In addition, the registrant servers 10A and 10B upload the pieces of data after deletion of personal information to the service providing infrastructure 100.

The provider server 20 of the external DB is a server provided in an institution different from the organizations A and B.

The provider server 20 uploads held data to the service providing infrastructure 100. For example, an operator of the provider server 20 selects data to be uploaded through the web UI screen for the processing system 1, which is deployed in the web browser, and uploads the data to the service providing infrastructure 100. At this time, the data uploaded by the provider server 20 is file data held by the external DB. The data uploaded by the provider server 20 is data in a format different from that of the pieces of data uploaded by the registrant servers 10A and 10B.

The service providing infrastructure 100 is provided with a secure computation system that stores data in a fragmented share state in a distributed manner across a plurality of servers and performs analysis processing in response to an analysis request from the analysis terminal 70 on secure computation. Each share is meaningless data, and the original data cannot be restored with only one share and information is not leaked. However, when a certain number or more of shares are obtained, the original data can be restored.

In the service providing infrastructure 100, a processing system including a cleansing server 40 and a secure computation system 50 is constructed. In the service providing infrastructure 100, the pieces of data and the file data uploaded from the registrant servers 10A and 10B and the provider server 20 are stored in a shared state in a distributed manner, and the analysis processing in response to the analysis request is performed on secure computation.

The cleansing server 40 performs data cleansing processing for secure computation registration on the uploaded data. The cleansing server 40 includes a layout conversion unit 41 (conversion unit) and a cleansing unit 42.

The layout conversion unit 41 converts each piece of data into a predetermined layout by using a predetermined conversion rule. For example, the file data uploaded from the provider server 20 has a different data layout and a larger number of items than the pieces of data uploaded by the registrant servers 10A and 10B. Therefore, the layout conversion unit 41 converts the layout of the file data and narrows down the items of the file data such that the items of the converted file data become the same as those of the pieces of data uploaded by the registrant servers 10A and 10B.

The cleansing unit 42 performs the data cleansing processing for secure computation registration on the pieces of data of the registrant servers 10A and 10B and the file data after the layout conversion. The cleansing unit 42 performs the data cleansing processing according to a predetermined processing rule.

For example, a format of data varies depending on a collection organization. In this way, item names of data may differ between pieces of data collected in different formats. In addition, granularity of the items and a function used to compute a parameter value may differ between the pieces of data collected in different formats.

Therefore, the cleansing unit 42 performs, as the data cleansing processing, re-computation for each piece of data such that the item name and/or the granularity of the items is aligned and/or the parameter value of each item becomes a parameter value in a case where the parameter value of each item is computed by a predetermined function for any data. As the data cleansing processing, the cleansing unit 42 unifies the item names, increases/decreases the number of items, and re-computes the parameter value of each item, so that the formats of the pieces of data match each other.

The secure computation system 50 stores the pieces of data and the file data after the data cleansing processing in a fragmented share state in a distributed manner across a plurality of servers 50-1 to 50-3 (secret sharing).

The secure computation system 50 separately registers the pieces of data and the file data after the data cleansing processing in tenants of the respective organizations. For example, as illustrated in FIG. 2, the secure computation system 50 separately stores the pieces of data in an organization A tenant 51A that stores the data of the organization A, an organization B tenant 51B that stores the data of the organization B, and an external DB tenant 52 that stores the file data of the external DB.

Then, the secure computation system 50 includes an analysis unit 53 that performs the analysis processing in response to the analysis request from the analysis terminal 70 on secure computation based on the pieces of data and the file data after the data cleansing processing. The secure computation system 50 performs secure computation (analysis processing) by performing multi-party computation of computing and exchanging data (share) among the plurality of servers 50-1 to 50-3 according to a determined procedure.

A web server 60 is connected to the analysis terminal 70 via a network, receives an input of an analysis condition, and outputs an analysis result. In response to the analysis request, the web server 60 outputs the analysis result of the analysis processing performed in the secure computation system 50 to the analysis terminal 70 that is a request source of the analysis request.

The web server 60 causes the analysis terminal 70 to display, for example, a web UI screen 61 (see FIG. 2) for the processing system 1, which is deployed in the web browser. The web server 60 receives the input of the analysis condition and the analysis request from the analysis terminal 70 through the web UI screen 61. Then, the web server 60 outputs the analysis result to the analysis terminal 70 through the web UI screen 61 for the processing system 1, for example.

The analysis terminal 70 transmits the analysis request including the analysis condition to the service providing infrastructure 100. The analysis terminal 70 receives the analysis result in an encrypted state from the service providing infrastructure 100, restores each received analysis result, and acquires a requested analysis result.

### [Processing Procedure]

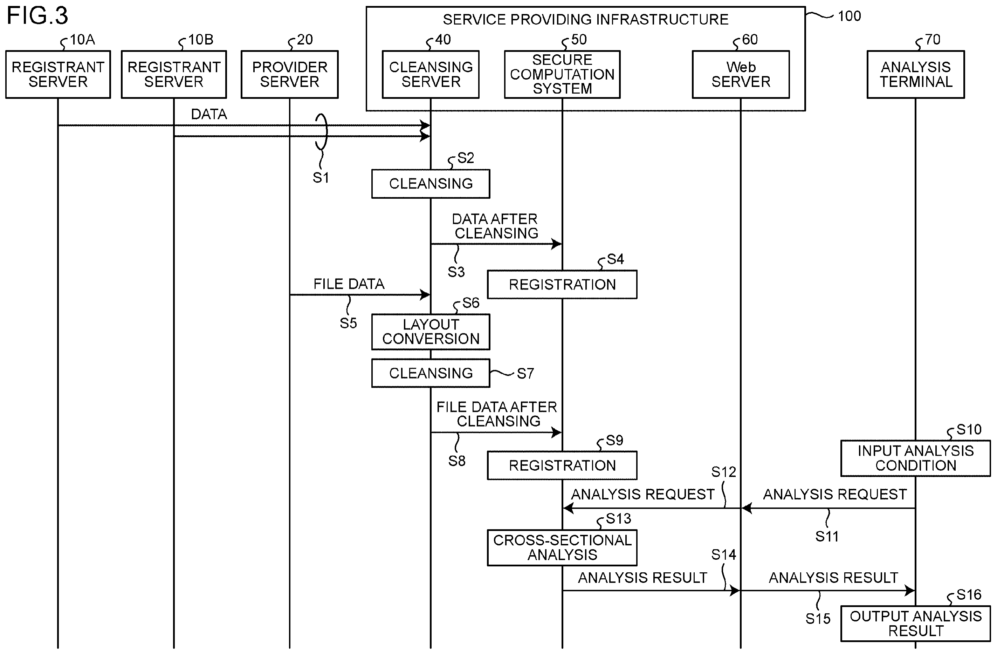

Next, a processing procedure of the processing system 1 will be described with reference to FIGS. 2 and 3. FIG. 3 is a sequence diagram illustrating the processing procedure of the processing method according to the first embodiment.

First, the data is uploaded from each organization to the service providing infrastructure 100 ((1) in FIG. 2). For example, from the registrant servers 10A and 10B of the organizations A and B, pieces of data D-1 of a layout determined by the organization A are uploaded as the pieces of data (step S1 in FIG. 3).

The cleansing server 40 receives the pieces of data D-1 of the organizations A and B. In the cleansing server 40, the cleansing unit 42 performs the data cleansing processing for secure computation registration on the received pieces of data D-1 ((3) of FIG. 2 and step S2 of FIG. 3).

Subsequently, the secure computation system 50 receives the pieces of data D-1 after the data cleansing processing from the cleansing server 40 (step S3 in FIG. 3). The secure computation system 50 registers the received pieces of data D-1 after the data cleansing processing in a fragmented share state across the plurality of servers 50-1 to 50-3 ((4) of FIG. 2 and step S4 of FIG. 3). At this time, the secure computation system 50 separately registers the pieces of data D-1 after the data cleansing processing in the organization A tenant 51A and the organization B tenant 51B.

In addition, file data F-1 held by the external DB is uploaded from the provider server 20 of the external DB to the service providing infrastructure 100 ((1) of FIG. 2 and step S5 of FIG. 3).

In the cleansing server 40, the layout conversion unit 41 converts a layout of the file data F-1 into the layout designated by the organization A by using the predetermined conversion rule ((2) of FIG. 2 and step S6 of FIG. 3).

Subsequently, in the cleansing server 40, the cleansing unit 42 performs the data cleansing processing for secure computation registration on the file data F-1 converted in step S10 ((3) of FIG. 2 and step S7 of FIG. 3). The cleansing unit 42 performs, on the file data F-1, the same processing as the data cleansing processing performed on the pieces of data D-1.

The secure computation system 50 receives the file data F-1 after the data cleansing processing from the cleansing server 40 (step S8 in FIG. 3). The secure computation system 50 registers the received data after the data cleansing processing in a fragmented share state across the plurality of servers 50-1 to 50-3 ((4) of FIG. 2 and step S9 of FIG. 3). The plurality of servers 50-1 to 50-3 register the file data F-1 after the data cleansing processing in the external DB tenant 52.

In this manner, the secure computation system 50 stores, in a distributed manner, the data after data cleansing in a fragmented share state and in a state in which it is possible to identify from which organization the data has been uploaded.

The analysis terminal 70 receives the input of the analysis condition and the analysis request through the web UI screen 61, for example ((5) and (6) in FIG. 2 and step S10 in FIG. 3), and transmits the analysis request to the service providing infrastructure 100 (steps S11 and S12 in FIG. 3).

In response to the analysis request received via the web server 60, the secure computation system 50 performs the cross-sectional analysis in response to the analysis request on secure computation based on the pieces of data and the file data F-1 after the data cleansing processing ((7) of FIG. 2 and step S13 of FIG. 3).

Then, the web server 60 receives the analysis result from the secure computation system 50 (step S14 in FIG. 3), and outputs the analysis result to the analysis terminal 70 through the web UI screen 61 for the processing system 1 ((8) of FIG. 2 and steps S15 and S16 of FIG. 3).

As a result, for example, various kinds of comparison such as comparison between arbitrary data of the own organization (for example, the organization A) and data accumulated in the external DB and comparison between an organization average and data accumulated in the external DB can be performed ((9) in FIG. 2).

### [Effects of First Embodiment]

As described above, the processing system 1 according to the first embodiment includes, in the service providing infrastructure 100, the cleansing server 40 including the cleansing unit that performs the data cleansing processing for secure computation registration on pieces of data transmitted from a plurality of organizations.

Then, the processing system 1 includes, in the service providing infrastructure 100, the secure computation system 50 that stores the pieces of data after the data cleansing processing in a fragmented share state across a plurality of servers and performs the analysis processing in response to the analysis request based on the pieces of data after the data cleansing processing on secure computation. The processing system 1 includes, in the service providing infrastructure 100, the web server 60 that outputs the analysis result of the analysis processing performed in response to the analysis request to a request source of the analysis request.

As described above, in the first embodiment, the data cleansing processing of unifying the item names, increasing/decreasing the number of items, and re-computing the parameter value of each item is performed for each piece of data such that formats of all the pieces of data match each other, and then the pieces of data are stored in a distributed manner in the secure computation system 50.

In particular, a format of medical data often varies. According to the first embodiment, it is possible to perform the cross-sectional analysis on secure computation by using highly accurate medical data and file data after data cleansing. Therefore, according to the first embodiment, it is possible to avoid a problem that analysis cannot be performed, and it is possible to provide an analysis result with higher accuracy. Then, according to the first embodiment, various types of data provided from a plurality of organizations and an external DB can be widely used.

In addition, in the first embodiment, since the pieces of data and the file data are analyzed on secure computation, analysis can be performed while security and personal information protection are ensured, and smooth use and utilization of data can be achieved. In addition, since the analysis result output from the service providing infrastructure 100 does not include the personal information, in the organizations A and B, when a data user performs analysis and comparison using another organization or an external DB as a data source, the data user can obtain a desired analysis result without directly subscribing to each organization or an external DB provider.

In the first embodiment, the file data F-1 uploaded from the provider server 20 is converted into the layout of the pieces of data D-1 uploaded by the registrant servers 10A and 10B by using the predetermined conversion rule. Then, the data cleansing processing similar to that of the pieces of data D-1 is performed on the file data F-1 after the layout conversion, and the file data F-1 is registered in the secure computation system 50.

As described above, according to the first embodiment, by matching the file data F-1 uploaded from the provider server 20 with the layout of the organization A, the file data of a different layout can also be registered in the secure computation system 50 by using the same data cleansing program and registration program as the pieces of data of the organizations A and B. Therefore, according to the first embodiment, it is possible to avoid a problem that the cross-sectional analysis cannot be performed due to a difference in layout among pieces of data, and it is possible to achieve smooth use and utilization of the data.

### [Second Embodiment]

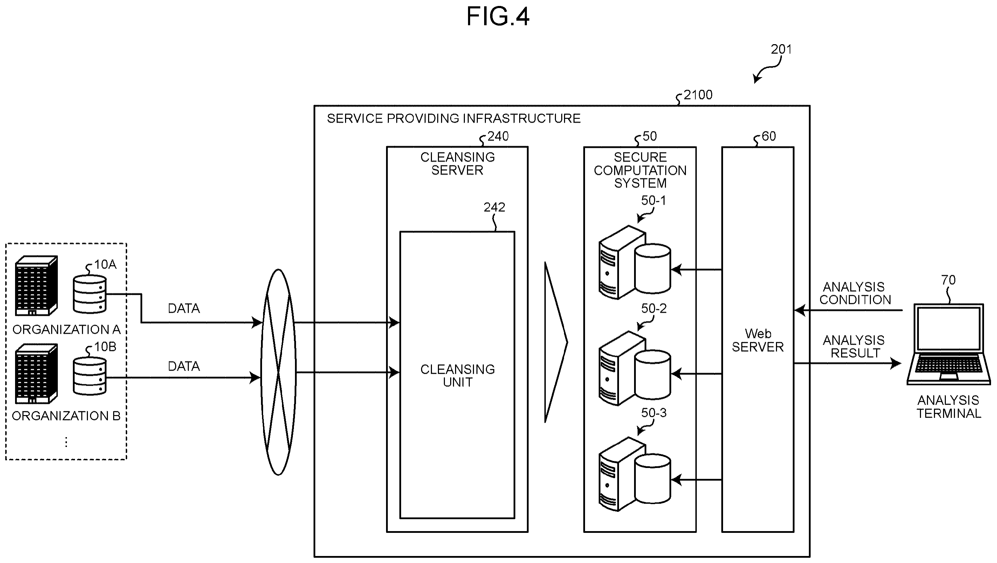

Next, a second embodiment will be described. In the second embodiment, for example, a case where data of a layout determined by a country is used as data will be described as an example. FIG. 4 is a block diagram illustrating an example of a configuration of a processing system according to the second embodiment.

As illustrated in FIG. 4, a processing system 201 in the second embodiment includes a service providing infrastructure 2100 instead of the service providing infrastructure 100 in FIG. 1.

The service providing infrastructure 2100 includes a cleansing server 240 instead of the cleansing server 40 in FIG. 1. The cleansing server 240 has a configuration in which a layout conversion unit 41 is deleted from the cleansing server 40. The cleansing server 240 has a function similar to that of the cleansing unit 42, and includes a cleansing unit 242 that performs data cleansing processing on the data.

In addition, registrant servers 10A and 10B upload pieces of data to the service providing infrastructure 2100. The pieces of data are, for example, pieces of data whose layout is unified across the country.

Since the layout of the pieces of data uploaded to the service providing infrastructure 2100 is unified across the country, the cleansing server 240 can omit layout conversion.

### [Processing Procedure]

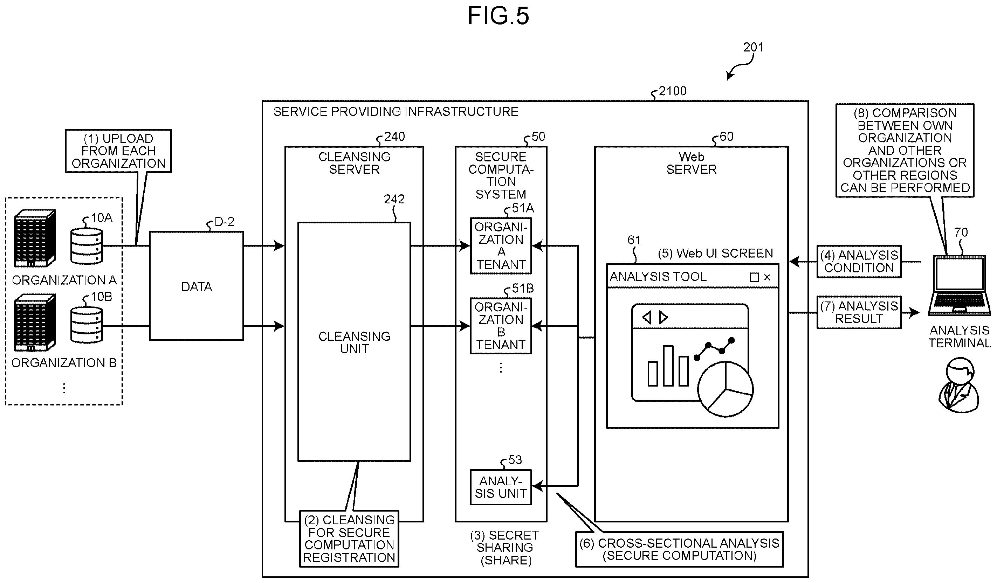

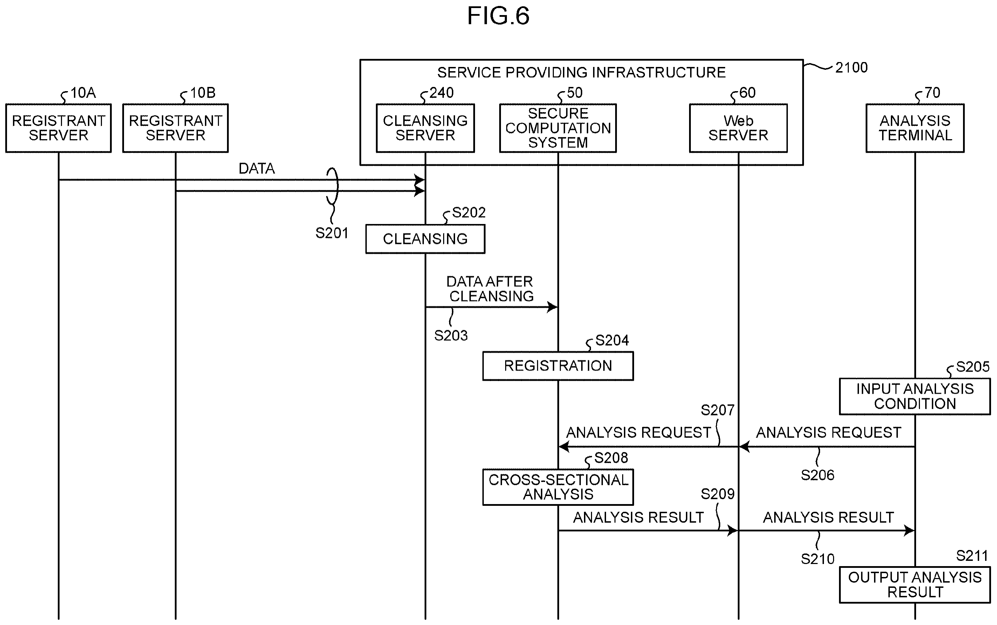

Next, a processing procedure of the processing system 1 will be described with reference to FIGS. 5 and 6. FIG. 5 is a diagram illustrating an outline of processing performed by the processing system according to the second embodiment. FIG. 6 is a sequence diagram illustrating a processing procedure of a processing method according to the second embodiment.

As illustrated in FIGS. 5 and 6, first, for example, pieces of data D-2 are uploaded from the registrant servers 10A and 10B of organizations A and B to the service providing infrastructure 2100 ((1) of FIG. 5 and step S201 of FIG. 6). The pieces of data D-2 are uploaded not only from the organizations A and B but also from various organizations across the country.

In the service providing infrastructure 2100, the cleansing server 240 receives the pieces of data D-2 of the organizations A and B. In the cleansing server 240, the cleansing unit 242 performs the data cleansing processing for secure computation registration on the received pieces of data D-2 ((2) of FIG. 5 and step S202 of FIG. 6).

Subsequently, a secure computation system 50 receives the pieces of data D-2 after the data cleansing processing from the cleansing server 240 (step S203 in FIG. 6). The secure computation system 50 registers the received data after the data cleansing processing in a fragmented share state across the plurality of servers 50-1 to 50-3 ((3) of FIG. 5 and step S204 of FIG. 6). At this time, the secure computation system 50 separately registers the pieces of data D-2 after the data cleansing processing in an organization A tenant 51A and an organization B tenant 51B.

An analysis terminal 70 receives an input of an analysis condition and an analysis request through a web UI screen 61 for the processing system 201, for example ((4) and (5) in FIG. 5 and step S205 in FIG. 6), and transmits an analysis request (steps S206 and S207 in FIG. 6).

In response to the analysis request received via a web server 60, the secure computation system 50 performs the cross-sectional analysis in response to the analysis request on secure computation based on the pieces of data D-2 after the data cleansing processing ((6) of FIG. 5 and step S208 of FIG. 6).

Then, the web server 60 receives the analysis result from the secure computation system 50 (step S209 in FIG. 6), and outputs the analysis result to the analysis terminal 70 through the web UI screen 61 for the processing system 201 ((7) of FIG. 5 and steps S210 and S211 of FIG. 6).

As a result, for example, various kinds of comparison such as comparison between arbitrary data of the own organization (for example, the organization A) and an organization average of other organizations or other regions can be performed ((8) in FIG. 5).

### [Effects of Second Embodiment]

As described above, in the second embodiment, for example, the same effects as those of the first embodiment are obtained by performing the cross-sectional analysis on secure computation by using data collected from all over the country. In addition, in the second embodiment, for example, since data of a layout unified across the country is used, the layout conversion can be omitted.

### [System Configuration, Etc.]

In addition, each illustrated component of each device is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Furthermore, arbitrary some or all of the processing functions executed in the devices can be implemented by a central processing unit (CPU), a graphics processing unit (GPU), and a program analyzed and executed by the CPU or the GPU, or can be implemented as hardware by wired logic.

Among the steps of processing described in the present embodiment, some or all of the steps of processing described as being performed automatically can be performed manually, or some or all of the steps of processing described as being performed manually can be performed automatically by a known method. In addition, the processing procedure, the control procedure, the specific name, and the information including various types of data and parameters illustrated in the document and the drawings can be arbitrarily changed unless otherwise specified.

### [Program]

In addition, it is also possible to create a program in which the steps of processing performed by the registrant servers 10A and 10B, the provider server 20, the servers 50-1 to 50-3, the web server 60, and the analysis terminal 70 described in the above embodiments are described in a language executable by a computer. For example, it is also possible to create a program in which the steps of processing performed by the registrant servers 10A and 10B, the provider server 20, the servers 50-1 to 50-3, the web server 60, and the analysis terminal 70 in the above embodiments are described in a language executable by a computer. In this case, when the computer executes the program, the same effects as those of the above embodiments can be obtained. Further, the program may be recorded in a computer-readable recording medium, and the program recorded in the recording medium may be read and executed by the computer to implement processing similar to those in the above-described embodiments.

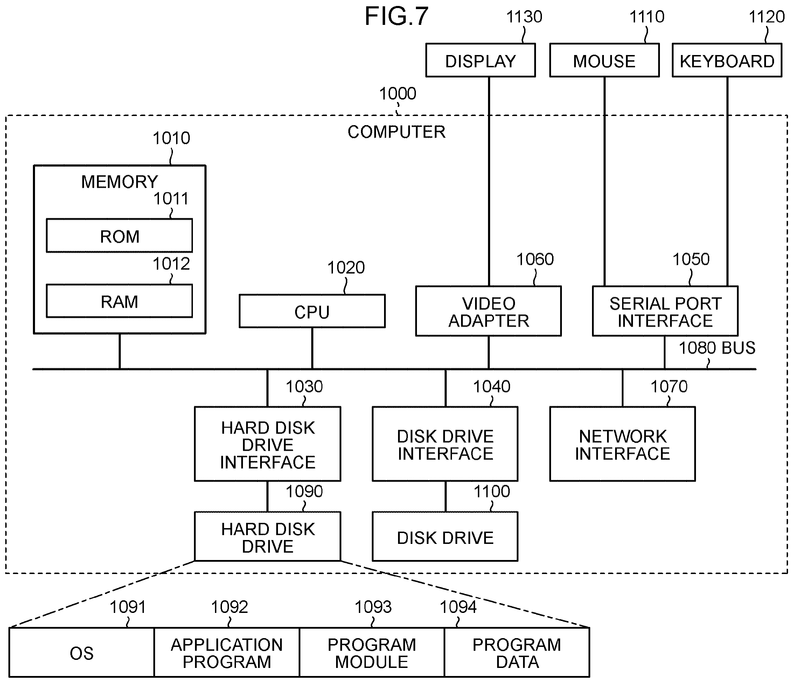

FIG. 7 is a diagram illustrating the computer that executes the program. As illustrated in FIG. 7, a computer 1000 includes, for example, a memory 1010, a CPU 1020, a hard disk drive interface 1030, a disk drive interface 1040, a serial port interface 1050, a video adapter 1060, and a network interface 1070, which are connected by a bus 1080.

As illustrated in FIG. 7, the memory 1010 includes a read only memory (ROM) 1011 and a random access memory (RAM) 1012. The ROM 1011 stores, for example, a boot program such as a basic input output system (BIOS). The hard disk drive interface 1030 is connected to a hard disk drive 1090 as illustrated in FIG. 7. The disk drive interface 1040 is connected to a disk drive 1100. For example, a removable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

Here, as illustrated in FIG. 7, the hard disk drive 1090 stores, for example, an operating system (OS) 1091, an application program 1092, a program module 1093, and program data 1094. That is, the program described above is stored, for example, in the hard disk drive 1090 as the program module in which a command executed by the computer 1000 is described.

Further, various types of data described in the above embodiments are stored as the program data in, for example, the memory 1010 or the hard disk drive 1090. Then, the CPU 1020 reads the program module 1093 and the program data 1094 stored in the memory 1010 and the hard disk drive 1090 to the RAM 1012 as necessary, and performs various processing procedures.

The program module 1093 and the program data 1094 related to the program are not limited to being stored in the hard disk drive 1090, and may be stored in, for example, a removable storage medium and read by the CPU 1020 via a disk drive or the like. Alternatively, the program module 1093 and the program data 1094 related to the program may be stored in another computer connected via a network (local area network (LAN), wide area network (WAN), or the like) and read by the CPU 1020 via the network interface 1070.

The above-described embodiments and modifications thereof are included in the technology disclosed in the present application, and likewise fall within the scope of the invention described in the claims and equivalents thereof.

### Reference Signs List

1, 201 PROCESSING SYSTEM
10A, 10B REGISTRANT SERVER
20 PROVIDER SERVER
40, 240 CLEANSING SERVER
41 LAYOUT CONVERSION UNIT
42 CLEANSING UNIT
50 SECURE COMPUTATION SYSTEM
50-1 to 50-3 SERVER
60 WEB SERVER
70 ANALYSIS TERMINAL
100, 2100 SERVICE PROVIDING INFRASTRUCTURE

## Claims

1. A processing system that stores data in a fragmented share state in a distributed manner across a plurality of devices, wherein the processing system is **characterized by** comprising:
a cleansing server that includes a cleansing unit that performs data cleansing processing for secure computation registration on each of pieces of data transmitted from a plurality of organizations;
a secure computation system that stores the pieces of data after the data cleansing processing in a fragmented share state in a distributed manner across a plurality of servers, and performs analysis processing in response to an analysis request on secure computation based on the pieces of data after the data cleansing processing; and
a web server that outputs an analysis result of the analysis processing performed in response to the analysis request to a request source of the analysis request.

2. The processing system according to claim 1,
**characterized in that** the cleansing server further includes a conversion unit that converts each piece of data into a predetermined layout by using a predetermined conversion rule.

3. The processing system according to claim 1, **characterized in that** the cleansing unit performs, as the data cleansing processing, re-computation for each piece of data such that an item name and/or granularity of items is/are aligned and/or a parameter value of each item becomes a parameter value in a case where the parameter value of each item is computed by a predetermined function.

4. The processing system according to claim 1, **characterized in that** the plurality of servers separately register the pieces of data after the data cleansing processing in tenants of the respective organizations.

5. A processing method to be executed by a processing system that stores data in a fragmented share state in a distributed manner across a plurality of devices, wherein the processing method is **characterized by** comprising:
a process of performing, by a cleansing server, data cleansing processing for secure computation registration on each of pieces of data transmitted from a plurality of organizations;
a process of storing, by a plurality of servers, the pieces of data after the data cleansing processing in a fragmented share state in a distributed manner across the plurality of servers;
a process of performing, by the plurality of servers, analysis processing in response to an analysis request on secure computation based on the pieces of data after the data cleansing processing among the plurality of servers; and
a process of outputting, by a web server, an analysis result of the analysis processing performed in response to the analysis request to a request source of the analysis request.

6. A processing program for causing a computer to execute a method, **characterized in that** the processing program
causes a computer serving as a cleansing server to perform a step of performing data cleansing processing for secure computation registration on each of pieces of data transmitted from a plurality of organizations,
causes respective computers serving as a plurality of servers to perform a step of storing the pieces of data after the data cleansing processing in a fragmented share state in a distributed manner across the plurality of servers, and a step of performing analysis processing in response to an analysis request on secure computation based on the pieces of data after the data cleansing processing among the plurality of servers, and
causes a computer serving as a web server to perform a step of outputting an analysis result of the analysis processing performed in response to the analysis request to a request source of the analysis request.
